# EUROPEAN PATENT APPLICATION

(11) **EP 3 229 145 A1**
(43) Date of publication of application: **11.10.2017**
(21) Application number: 17161704.6
(22) Date of filing: 17.03.2017
(51) Int. Cl.: G06F 13/28, G06F 15/163

(54) **PARALLEL PROCESSING APPARATUS AND COMMUNICATION CONTROL METHOD**

(30) Priority: 07.04.2016 JP 2016077292
(71) Applicant: FUJITSU LIMITED, Nakahara-ku Kawasaki-shi Kanagawa 211-8588 (JP)
(72) Inventor: AJIMA, Yuichiro, Kawasaki-shi,, Kanagawa 211-8588 (JP)
(74) Representative: Lewin, David Nicholas

(57) **Abstract**

A parallel processing apparatus(1) includes nodes (11)-(13). The node (11) includes a processor (111) that starts RDMA communication of certain data and receives a response of the RDMA communication, and a communication interface (113) that transmits an RDMA communication request giving instructions to transmit the certain data by RDMA when the processor (111) starts the RDMA communication of the certain data. The node (12) includes a memory (122) that stores therein the certain data, and a communication interface (123) that receives the RDMA communication request transmitted from the communication interface (113) and transmits the certain data stored in the memory (122) to the node (13) by RDMA. The node (13) includes a memory (132), and a communication interface (133) that receives the certain data transmitted from the communication interface (123) by RDMA, stores the certain data in the memory (132), and generates and transmits the response of the RDMA communication.

## Description

### FIELD

The embodiments discussed herein are related to a parallel processing apparatus and a communication control method.

### BACKGROUND

In recent years, in the field of science and technology, a distributed-memory parallel computer that has a configuration that a large number of nodes, each of which includes a processor and a memory and independently executes an operating system (OS), are connected by an interconnect has been the mainstream. The technology of performing high-performance computation using a distributed-memory parallel computer is referred to as high performance computing (HPC). In such a distributed-memory parallel computer, processes are activated at the respective nodes, and while communicating with one another, the activated processes perform parallel computation. The interconnect includes a network that connects among the nodes, and devices with which the nodes connect to the network.

In order to reliably transfer data between two nodes, the communication is controlled in a procedure that is matched to the characteristics of the network that connects between the nodes, and the devices with which the nodes connect to the network. The procedure that is matched to the characteristics of the network that connects between the nodes, and the devices with which the nodes connect to the network is also referred to as protocol.

The protocol processing of transmission control protocol (TCP)/Internet protocol (IP) used in the Internet is generally performed by a protocol stack of the OS. Each process performs input and output of data to the protocol stack by a software interface such as Berkeley Socket. The protocol processing by the protocol stack is executed by a system process of the OS. That is, when executing the protocol processing, the processing that the processor executes is moved to an OS kernel due to an interrupt and others, and it is difficult for the processor to perform other calculations in the meantime.

To increase the arithmetic efficiency of the processor, that is, to make the execution performance closer to the theoretical performance, it is better not to perform the protocol processing. Thus, in the field of HPC, in general, the data is transferred in a method referred to as remote direct memory access (RDMA). The RDMA is a technique that a device in the interconnect directly reads out a memory that a transmission source process manages, transfers data via the network connecting between nodes, and directly writes into a memory that a destination process manages.

Although there has been no de facto standard in RDMA protocol, in general, any RDMA protocol includes functions referred to as Put and Get. The Put is a protocol that a transmission source process starts, and is equivalent to writing to the other node. The Get is a protocol that a destination process starts, and is equivalent to reading out from the other node.

When performing the protocol processing of RDMA, in the interconnect also, the instruction to start the protocol is performed by the processor of a transmission source in the case of the Put, and by the processor of a destination node in the case of the Get. Thus, the communication using the conventional RDMA protocol is regarded as the communication that only the processor on one side performs communication control, and is also referred to as one-sided communication.

It apparently seems that the Put only needs to transmit data to the destination because the starting source process of protocol is the transmission source, and it appears simpler than the Get for which round-trip communication is performed in order to transmit data from the transmission source process that is different from the starting source process of protocol. However, even in the Put in practice, because a notice of data arrival is transmitted to the transmission source from the destination in order to check that the data has been transferred reliably, it becomes the round-trip communication. As for the protocol, both the Put and Get are a round-trip procedure from the transmission source process to the destination process, and are different in that whether the path that accompanies the transfer data is the outward path or the return path.

Because the protocol of RDMA is processed in the device in the interconnect, it is preferable to be in simple design so as to be easily incorporated into hardware. The Put and Get are in simple configuration that makes one round trip between the transmission source process and the destination process, and thus satisfy this condition.

There are other cases that the complexity becomes a problem in incorporating into the hardware. For example, the memory that the process uses is fragmented by the virtualization of the OS, and for practical purposes, an address translation mechanism is used. In addition, it is preferable that there be a scheme that detects the loss and damage of data by protocol and guarantees the delivery of the data. Consequently, there are cases that a data loss or accidental data may arise on the network due to a fault such as a design mistake, a node failure on the path, and others. That leads to taking countermeasures such as the suspension of calculation, retransmission of data, and others, and thus the protocol becomes complex. In the interconnect for HPC, in order to avoid this complexity, it is common to elaborate the functions that are useful for delivery guarantee at a system level of the network connecting among nodes and of the devices that the nodes connect to the network. In this regard, it is difficult to presuppose the quality of a path, and thus it can be said that the protocol used in the interconnect is clearly different from TCP/IP that elaborate as protocol not only the delivery guarantee but also the congestion control.

However, in the communication of the Put and Get in RDMA, a wait time arises in a series of communications having dependency relation, and that causes the arithmetic efficiency of the processor to deteriorate. The deterioration in the arithmetic efficiency of the processor by the Put and Get communications pronouncedly appears, in a frequent communication pattern referred to as group communication, when efficient communication algorithm is employed. The group communication is a communication method that the communications of the same purposes are performed simultaneously among a plurality of processes. In the parallel processing apparatus, for example, the group communication is used when distributing initial data to each node in performing parallel computation and when distributing a result to each node.

For example, as the group communication, when transferring the same data to a plurality of nodes, conceivable is the communication that a transmission source node transmits the data to all the nodes by the Put. In this case, it is the transmission source that is concerned in the communication control. However, this method takes too much time. Consequently, conceivable is the group communication in which the transmission source transfers data to one node for the first time, and for the second time, each of the two nodes having the data transfers the data to the other one node, and for the third time, each of the four nodes having the data transfers the data to the other one node. As just described, when the data is transferred by the algorithm that raises the number of transmission source processes by the power of two, the number of transfers in the data transfer processing needs only the binary logarithm of the number of processes.

In the group communication that executes a specific communication pattern, in order not to consume execution time of the processor in the communication control, the interconnect that has a group communication function has been developed. For example, a variety of methods such as the one that the network connecting among the nodes has a group communication function, and the one that the device that the node connects to the network is equipped with a controller to execute the group communication protocol have been developed. However, when the interconnect has the group communication function, it can be a problem in that the functionality will be fixed and that the capacity of the communication buffer will be restricted.

On this point, when the device that the node connects to the network is equipped with the controller, the functionality and the capacity of the communication buffer can have flexibility to some extent. However, when the controller is enhanced in functionality, the communication buffer is secured on a main storage device, and advanced processing such as reuse and sharing is added, it ends up using advanced resource management software such as an OS. In this case, the controller is to have a performance level of a processor. Furthermore, in this case, although there are no restrictions in the main storage device that can be used in executing in the conventional RDMA communication, the restriction in the capacity of the communication buffer remains. Accordingly, not by providing the controller with the environment for running the processor, it is preferable to perform processing by the processor by increasing the number of processors and cores.

There is a conventional technology that uses RDMA when moving a virtual machine between servers. Furthermore, there is a conventional technology that detects passing-by by providing an identifier on a record and reduces the overhead of waiting between programs when the data transfer between nodes is performed in RDMA. Related-art examples are described in Japanese Laid-open Patent Publication No. 2008-097273 and Japanese Laid-open Patent Publication No. 2002-063060.

However, even when the group communication is efficiently performed using a processor, there are following problems. For example, when the data transfer using the algorithm that raises the number of transmission sources of data by the power of two is performed, ultimately, one half the nodes are in a data wait state. In such communication algorithm, although the efficiency of data transfer processing is improved, because complex communication control by a large number of nodes is performed, it is difficult to implement the programming that performs calculation while waiting for data. Accordingly, the data wait time is not used, and thus the arithmetic efficiency of the processor deteriorates.

As in the foregoing, in group communication, when performing the communication, the synchronization of the respective communications may be executed. Then, in the group communication that the synchronization is expected, the wait time may get long and the communication efficiency may deteriorate.

Even when the conventional technology that uses RDMA for moving the virtual machine and the conventional technology that detects passing-by by providing the identifier on a record, it is difficult to reduce such a data wait time.

Accordingly, it is an object in one aspect of an embodiment of the invention to provide a parallel processing apparatus and a communication control method with the improved processing power.

### SUMMARY

According to an aspect of an embodiment, a parallel processing apparatus includes: a first information processing apparatus; a second information processing apparatus; and a third information processing apparatus, the first information processing apparatus includes: a data transfer controller that starts RDMA communication of certain data and receives a response of the RDMA communication, and a transfer instruction unit that transmits an RDMA communication request giving instructions to transmit the certain data by the RDMA communication when the data transfer controller starts the RDMA communication of the certain data, the second information processing apparatus includes: a first memory that stores therein the certain data, and a data transmitting unit that receives the RDMA communication request transmitted from the data transfer controller and transmits the certain data stored in the first memory to the third information processing apparatus by the RDMA communication, and the third information processing apparatus includes: a second memory, and a reception processor that receives the certain data transmitted by the data transmitting unit by the RDMA communication, stores the certain data into the second memory, generates the response of the RDMA communication, and transmits the response.

### BRIEF DESCRIPTION OF DRAWINGS

FIG. 1 is a block diagram of a parallel processing apparatus;
FIG. 2 is a diagram illustrating transmission of an RDMA communication request;
FIG. 3 is a diagram illustrating transmission of transfer data;
FIG. 4 is a diagram illustrating transmission of a reception response of RDMA from a destination of transfer data to a transmission source of transfer data;
FIG. 5 is a diagram illustrating transmission of a reception response of RDMA from the transmission source of transfer data to a control source;
FIG. 6 is a flowchart of processing of a communication instruction for a communication interface performed by a processor of a node of the control source;
FIG. 7 is a flowchart of transmission processing of an RDMA communication request performed by a communication interface of the node of the control source;
FIG. 8 is a flowchart of transmission processing of transfer data performed by a communication interface that is to be a transmission source of transfer data;
FIG. 9 is a flowchart of transmission processing of a reception response of RDMA performed by a communication interface that is to be a destination of transfer data;
FIG. 10 is a flowchart of transfer processing of the reception response of RDMA performed by the communication interface that is to be a transmission source of transfer data;
FIG. 11 is a diagram for explaining an overall operation in the distribution of transfer data using group communication according to a first embodiment;
FIG. 12 is a flowchart illustrating a procedure when one process executes all data transfers in group communication; and
FIG. 13 is a diagram illustrating transmission of an RDMA communication request, transfer data, and a reception response of RDMA performed by a parallel processing apparatus according to a second embodiment.

### DESCRIPTION OF EMBODIMENTS

In the following description, preferred embodiments of a parallel processing apparatus and a communication control method disclosed in the present application will be explained in detail with reference to the accompanying drawings. The parallel processing apparatus and the communication control method disclosed in the present application are not limited by the following exemplary embodiments.

### [a] First Embodiment

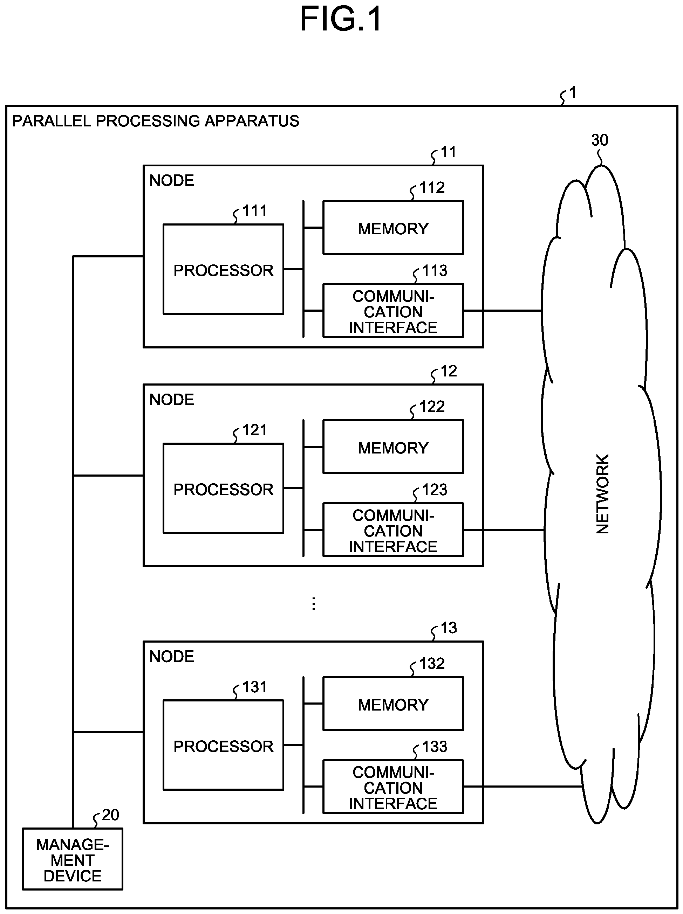

FIG. 1 is a block diagram of a parallel processing apparatus. As illustrated in FIG. 1, a parallel processing apparatus 1 according to a first embodiment includes a plurality of nodes including nodes 11 to 13. When the respective nodes including the nodes 11 to 13 are not distinguished, they are referred to as "node 10". The node 10 is an information processing apparatus. The parallel processing apparatus 1 further includes a management device 20 and a network 30.

The network 30 is a network that forms an interconnect, and connects among the nodes 10.

The management device 20 is connected to the respective nodes 10. The management device 20 performs assignment of processes to the respective nodes 10, and detection of abnormalities of the respective nodes 10.

The node 11 includes a processor 111, a memory 112, and a communication interface 113. The node 12 includes a processor 121, a memory 122, and a communication interface 123. The node 13 includes a processor 131, a memory 132, and a communication interface 133.

The processors 111, 121, and 131 are arithmetic processing units. The processors 111, 121, and 131 make an OS operate. Moreover, the processors 111, 121, and 131 execute processes, and perform arithmetic processing by using the respective memories 112, 122, and 132. The processors 111, 121, and 131 perform communication among the nodes 10 by using the respective communication interfaces 113, 123, and 133. The processors 111, 121, and 131 further make the communication interfaces 113, 123, and 133 perform communication in RDMA, by giving instructions to perform communication in RDMA to the communication interfaces 113, 123, and 133, respectively.

The memories 112, 122, and 132 are main storage devices. The memories 112, 122, and 132 are random access memories (RAMs) and the like, for example.

The communication interfaces 113, 123, and 133 are devices that the nodes 10 in the interconnect connect to the network 30. The communication interfaces 113, 123, and 133 are capable of performing data transmission by RDMA. The communication interfaces 113, 123, and 133 include an arithmetic processing unit constituted of a dedicated circuit and others which operates independently of the processors 111, 121, and 131. The control such as data transmission and reception response by the communication interfaces 113, 123, and 133 is achieved by this arithmetic processing unit.

The following describes the processing of group communication in which, in the parallel processing apparatus 1 in the first embodiment, data stored in the memory 112 of the node 11 is transmitted by using RDMA to all other nodes 10. The parallel processing apparatus 1 in the first embodiment performs asynchronous group communication. In the following description, the data stored in the memory 112 to be distributed to all the nodes 10 is referred to as "transfer data".

The node 11 transmits the transfer data in RDMA to the other nodes 10 from the own device, and also controls the transmission of the transfer data in RDMA among the other nodes 10. That is, the processor 111 of the node 11 manages the distribution of the transfer data in RDMA to all the nodes 10. In other words, the processors of the other nodes 10 including the processors 122 and 131 are not involved in the transmission control of the transfer data. This node 11 corresponds to one example of a "first information processing apparatus". The following describes specific operation of the node 11.

The memory 112 of the node 11 holds the transfer data.

The processor 111 of the node 11 performs the following processing when transmitting the transfer data to the other nodes 10 from the node 11. The case that the destination of the transfer data is the node 12 is exemplified. The processor 111 secures in the memory 112 a memory area for a communication instruction. Then, the processor 111 writes, into the memory area for a communication instruction, the address of the node 11 that is a packet transmission source, a read-out memory address, the address of the node 12 that is a packet destination, a write memory address, and a transfer data size. The processor 111 then notifies the communication interface 113 of a memory address of an RDMA communication request for transfer data. The RDMA communication request here is a signal to instruct the node 12 to transmit the transfer data to the node 13 in RDMA.

Subsequently, the processor 111 receives a reception response of RDMA from the communication interface 113 and checks the completion of data transmission.

Meanwhile, when transmitting and receiving of the transfer data are made to be performed among the other nodes 10, the processor 111 of the node 11 performs the following processing. The communication among the other nodes 10 is performed in the same manner in any of the nodes 10. Thus, in the following description, the case that the transfer data has already been stored in the memory 122 of the node 12 and that the transfer data is transmitted from the node 12 to the node 13 in RDMA will be described.

The processor 111 secures in the memory 112 a memory area for a communication instruction to make the node 12 transmit an RDMA communication request. Then, the processor 111 writes, into the memory area for a communication instruction, a transmission-source node address of transfer data, a read-out memory address, a control-source node address, a destination node address of transfer data, a write memory address, and a transfer data size.

In this case, the node 11 transmits toward the node 12 a packet of RDMA communication request that the transfer data stored in the memory 122 of the node 12 is transmitted in RDMA to the node 13. Thus, the transmission-source node address corresponds to the destination of the packet transmitted from the node 11. In this case, the processor 111 writes the address of the node 12 as the transmission-source node address. The control-source node address corresponds to the transmission source of the packet. In this case, the processor 111 writes the address of the node 11 as the control-source node address. Moreover, the processor 111 writes the address of the node 13 as the destination node address.

The processor 111 then notifies the communication interface 113 of the memory address of the packet transmission of the RDMA communication request. Subsequently, the processor 111 receives a reception response of RDMA from the communication interface 113 and checks the completion of data transmission. This processor 111 corresponds to one example of a "data transfer controller".

The communication interface 113 of the node 11, when transmitting the transfer data from the node 11 to the node 12, receives from the processor 111 a notice of the memory address of the RDMA communication request of transfer data. Then, the communication interface 113 acquires, from the specified memory address, the address of the node 11 that is the packet transmission source, the read-out memory address, the address of the node 12 that is the packet destination, the write memory address, and the transfer data size. The communication interface 113 then acquires the transfer data from the memory 112 by using the read-out memory address and the transfer data size. Then, the communication interface 113 stores, into a header of a packet, the address of the node 12 that is the packet destination, the address of the node 11 that is the packet transmission source, the read-out memory address, the write memory address, and the transfer data size. The communication interface 113 further stores the transfer data into a data portion of the packet and generates the packet. Then, the communication interface 113 transmits to the communication interface 123 of the node 12 the generated packet in which the transfer data has been stored.

Subsequently, the communication interface 113 receives the packet of reception response of RDMA from the communication interface 123 of the node 12. Then, the communication interface 113 transmits the reception response of RDMA to the processor 111.

Meanwhile, when the transfer data is made to be transmitted to the node 13 from the node 12, the communication interface 113 of the node 11 receives a notice of the memory address of the packet transmission of an RDMA communication request from the processor 111. Then, the communication interface 113 acquires, from the specified memory address, the address of the node 12 of the transmission source, the read-out memory address, the address of the node 11 that is the control source, the address of the node 13 of the destination, the write memory address, and the transfer data size. Next, the communication interface 113 stores, into the header of a packet, the address of the node 12 that is the packet destination and is to be the transmission source of the transfer data, the address of the node 11 that is the packet transmission source and is the control source, the address of the node 13 that is to be the destination of the transfer data. The communication interface 113 further stores, into the header of the packet, the read-out memory address, the write memory address, and the transfer data size and generates the packet. Then, the communication interface 113 transmits the generated packet to the communication interface 123 of the node 12.

Subsequently, the communication interface 113 receives a packet of reception response of RDMA from the communication interface 123 of the node 12. Then, the communication interface 113 transmits the reception response of RDMA to the processor 111. This communication interface 113 corresponds to one example of a "transfer instruction unit".

Next, the node 12 will be described. This node 12 corresponds to one example of a "second information processing apparatus". When the node 11 transmits transfer data to the node 12, the transfer data is not yet stored in the memory 122 of the node 12. Meanwhile, when the transfer of transfer data from the node 12 to the node 13 is instructed by the node 11, the memory 122 of the node 12 already holds the transfer data. This memory 122 corresponds to one example of a "first memory".

The communication interface 123 of the node 12, when receiving the transfer data from the node 11, receives a packet storing therein the transfer data from the communication interface 113 of the node 11 via the network 30. Then, the communication interface 123 takes out the transfer data from the data portion of the received packet. Moreover, the communication interface 123 acquires, from the header of the packet, the write memory address. Then, the communication interface 123 writes the transfer data to the address of the memory 122 specified by the write memory address.

Subsequently, the communication interface 123 generates a packet of reception response of RDMA to give a notice of the completion of the reception of transfer data by RDMA. Then, the communication interface 123 transmits the generated packet of reception response of RDMA to the communication interface 113 of the node 11 via the network 30.

Meanwhile, when the transmission of transfer data from the node 12 to the node 13 is controlled by the node 11, the communication interface 123 of the node 12 receives a packet of RDMA communication request from the communication interface 113 of the node 11 via the network 30. Next, the communication interface 123 acquires, from the header of the packet, the address of the node 12 that is the destination of the packet as the address of the transmission source of the transfer data. The communication interface 123 further acquires, from the header of the packet, the address of the node 13 that is the destination of the transfer data. Moreover, the communication interface 123 acquires, from the header of the packet, the read-out memory address, the write memory address, and the transfer data size.

The communication interface 123 then acquires the transfer data from the memory 122 by using the read-out memory address and the transfer data size. Then, the communication interface 123 generates a packet for transferring the transfer data. Specifically, the communication interface 123 stores, into the header of a packet, the address of the node 13 that is the destination of the transfer data and is also the destination of the packet, and the address of the node 12 that is the transmission source of the transfer data and is also the transmission source of the packet. The communication interface 123 further stores, into the header of the packet, the read-out memory address, the write memory address, and the transfer data size. Moreover, the communication interface 123 stores the transfer data into the data portion of the packet. The communication interface 123 then transmits in RDMA to the communication interface 133 of the node 13 via the network 30 the generated packet in which the transfer data has been stored.

Subsequently, the communication interface 123 receives a packet of reception response of RDMA from the communication interface 133 of the node 13. Then, the communication interface 123 generates a packet of reception response of RDMA. Specifically, the communication interface 123 acquires, from the header of the received packet, the address of the node 12 that is the transmission source of the transfer data and is the destination of the packet of reception response. The communication interface 123 further acquires, from the header of the received packet, the address of the node 13 that is the destination of the transfer data and is the transmission source of the packet of reception response. The communication interface 123 further acquires, from the header of the received packet, the address of the node 11 of the control source, the read-out memory address, the write memory address, the transfer data size, and an error code that indicates reception result. Then, the communication interface 123 stores, into the header of a packet to transmit, the address of the node 11 that is the control source and is to be the destination of a packet of reception response. The communication interface 123 further stores, into the header of the packet to transmit, the address of the node 12 that is the transmission source of the transfer data and is to be the transmission source of the packet of reception response. The communication interface 123 further stores, into the header of the packet to transmit, the address of the node 13 that is the destination of the transfer data, the read-out memory address, the write memory address, the transfer data size, and an error code that indicates reception result. Then, the communication interface 123 transmits the generated packet of reception response of RDMA to the communication interface 113 of the node 11 via the network 30. This communication interface 123 corresponds to one example of a "data transmitting unit".

Next, the node 13 will be described. This node 13 corresponds to one example of a "third information processing apparatus". When the transfer of transfer data from the node 12 to the node 13 is instructed by the node 11, the transfer data is not yet stored in the memory 132 of the node 13. This memory 132 corresponds to one example of a "second memory".

The communication interface 133 of the node 13, when the transmission of transfer data from the node 12 to the node 13 is controlled by the node 11, receives a packet storing therein the transfer data from the communication interface 123 of the node 12 via the network 30. Then, the communication interface 133 takes out the transfer data from the data portion of the received packet. Moreover, the communication interface 133 acquires, from the header of the packet, the write memory address. Then, the communication interface 133 writes the transfer data to the address of the memory 132 specified by the write memory address.

Subsequently, the communication interface 133 generates a packet of reception response of RDMA to give a notice of the completion of the reception of transfer data by RDMA. Specifically, the communication interface 133 acquires, from the header of the received packet, the address of the node 12 that is the transmission source of the transfer data, the address of the node 13 that is the destination of the transfer data, and the address of the node 11 of the control source. Moreover, the communication interface 133 acquires, from the header of the received packet, the read-out memory address, the write memory address, and the transfer data size. Then, the communication interface 133 stores, into the header of a packet to transmit, the address of the node 12 that is the transmission source of the transfer data and is the destination of the packet of reception response. The communication interface 133 further stores, into the header of the packet to transmit, the address of the node 13 that is the destination of the transfer data and is the transmission source of the packet of reception response. The communication interface 133 further stores, into the header of the packet to transmit, the address of the node 11 of the control source, the read-out memory address, the write memory address, and the transfer data size. Moreover, the communication interface 133 stores, into the header of the packet to transmit, an error code indicative of reception result. Then, the communication interface 133 transmits the generated packet of reception response of RDMA to the communication interface 123 of the node 12 via the network 30. This communication interface 133 corresponds to one example of a "reception processor".

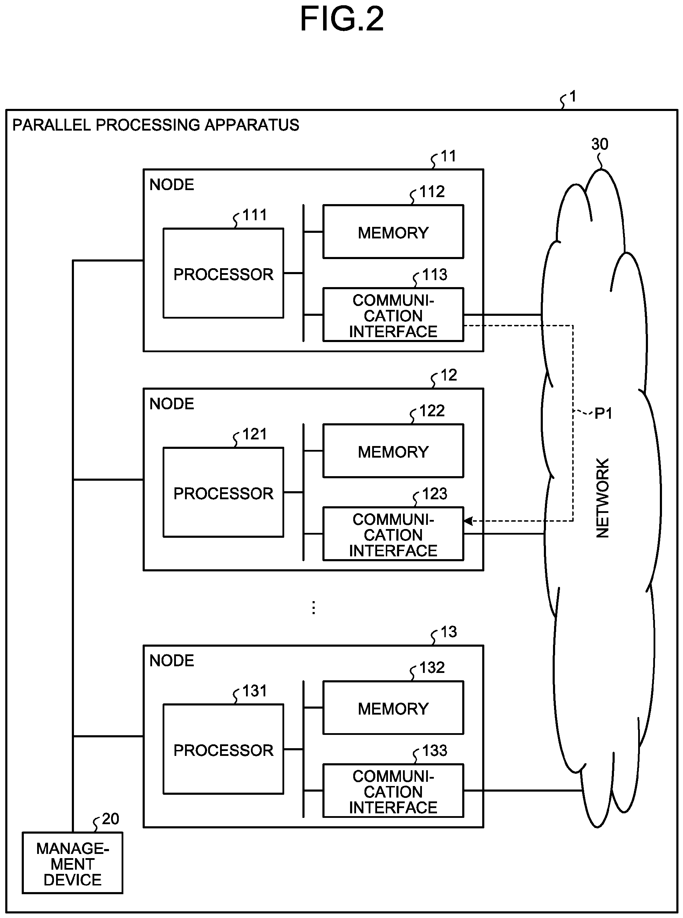

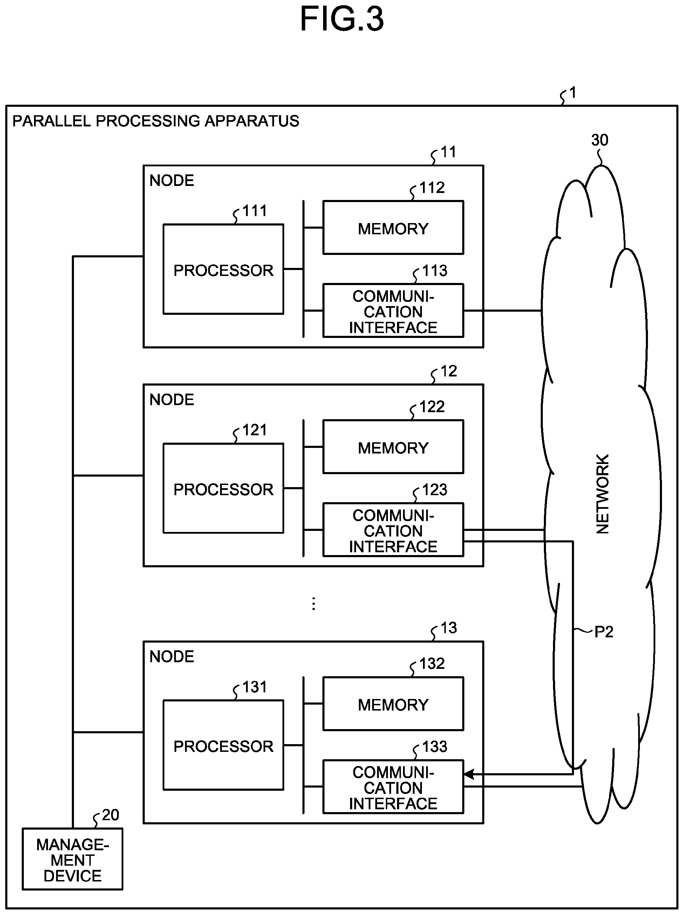

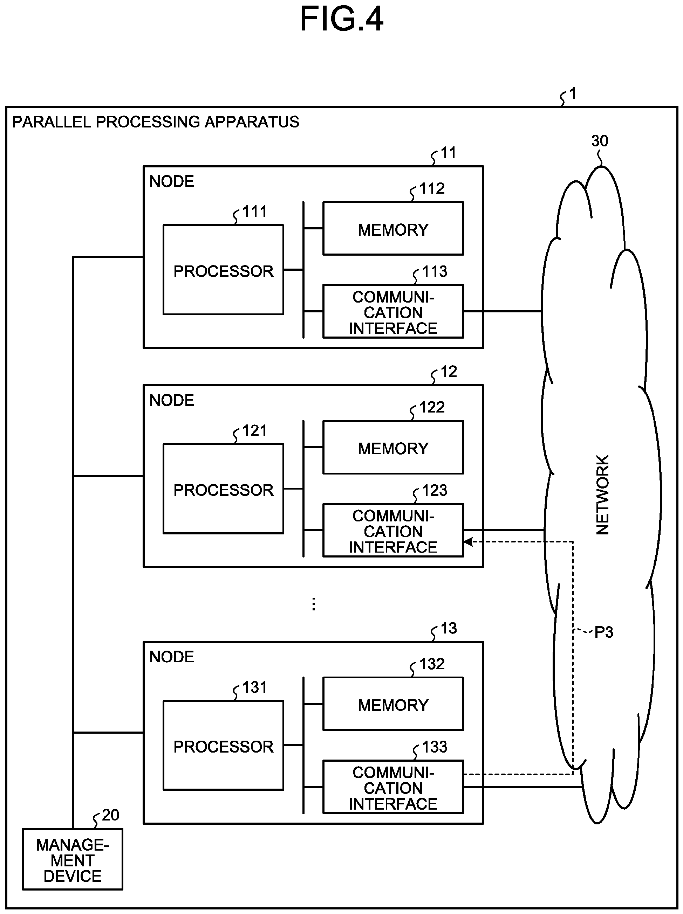

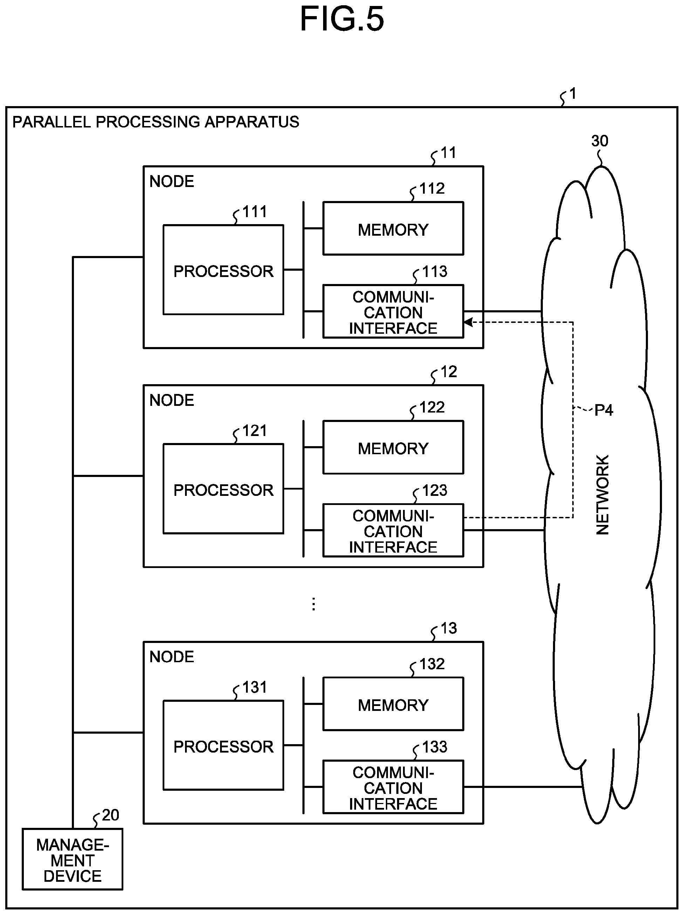

With reference to FIGS. 2 to 5, the following describes the transmission of an RDMA communication request, transfer data, and a reception response of RDMA in a lump when the transmission of the transfer data by RDMA from the node 12 to the node 13 is controlled by the node 11. FIG. 2 is a diagram illustrating the transmission of an RDMA communication request. FIG. 3 is a diagram illustrating the transmission of the transfer data. FIG. 4 is a diagram illustrating the transmission of a reception response of RDMA from a destination of the transfer data to a transmission source of the transfer data. FIG. 5 is a diagram illustrating the transmission of a reception response of RDMA from the transmission source of the transfer data to a control source.

The communication interface 113 of the node 11, after receiving a communication instruction from the processor 111, generates a packet of RDMA communication request for the communication interface 123 of the node 12. Then, as indicated with processing P1 in FIG. 2, the communication interface 113 of the node 11 transmits the packet of RDMA communication request to the communication interface 123 of the node 12.

The communication interface 123 of the node 12 receives the packet of RDMA communication request transmitted from the communication interface 113 of the node 11. Then, the communication interface 123 of the node 12 acquires, from the packet of RDMA communication request, the information on the transfer data to transmit and the information on the destination, for example. The communication interface 123 of the node 12 then acquires the transfer data from the memory 122. The communication interface 123 of the node 12 then generates a packet to transmit the transfer data. Then, the communication interface 123 of the node 12, as indicated with processing P2 in FIG. 3, transmits the transfer data to the communication interface 133 of the node 13 by transmitting the generated packet.

The communication interface 133 of the node 13 receives the packet for transmitting the transfer data which is transmitted from the communication interface 123 of the node 12. Then, the communication interface 133 of the node 13 acquires the transfer data from the received packet and stores it in the memory 132. The communication interface 133 of the node 13 then acquires, from the received packet, the address of the node 12 of the transmission source that is to be the destination of a packet, for example. The communication interface 133 of the node 13 then generates a packet of reception response of RDMA. Then, as indicated with processing P3 in FIG. 4, the communication interface 133 of the node 13 transmits the packet of reception response of RDMA to the communication interface 123 of the node 12.

The communication interface 123 of the node 12 receives the packet of reception response of RDMA transmitted from the communication interface 133 of the node 13. Then, the communication interface 123 of the node 12 acquires, from the received packet, the address of the node 11 of the control source that is to be the destination of a packet, for example. The communication interface 123 of the node 12 then generates a packet of reception response of RDMA. Then, as indicated with processing P4 in FIG. 5, the communication interface 123 of the node 12 transmits the packet of reception response of RDMA to the communication interface 113 of the node 11. The communication interface 113 of the node 11 receives the packet of reception response of RDMA from the communication interface 123 of the node 12. Then, the communication interface 113 of the node 11 transmits the reception response of RDMA to the processor 111 of the node 11. The processor 111 of the node 11 receives the reception response of RDMA and checks the completion of the transmission processing of transfer data by RDMA.

As in the foregoing, the parallel processing apparatus 1 can transmit, without using the processor 121 of the node 12 and the processor 131 of the node 13, the transfer data from the node 12 to the node 13, by the control of the processor 111 of the node 11.

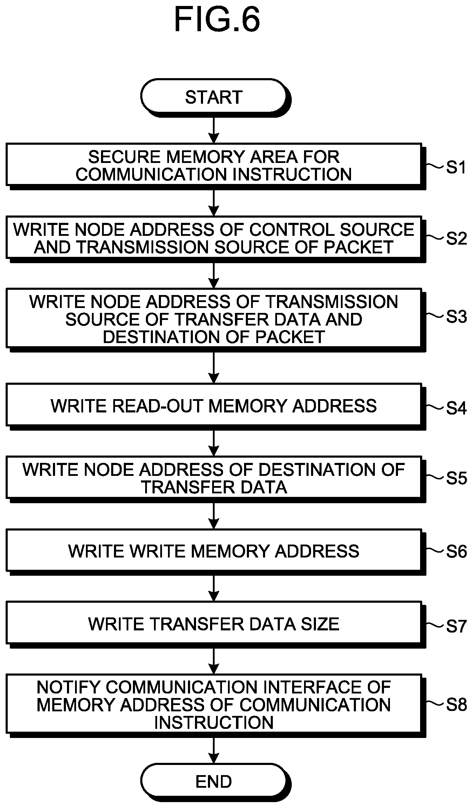

Next, with reference to FIG. 6, the following describes a sequence of the processing of a communication instruction for the communication interface 113 performed by the processor 111 of the node 11 of the control source, when the transmission of transfer data by RDMA from the node 12 to the node 13 is controlled by the node 11. FIG. 6 is a flowchart of the processing of a communication instruction for a communication interface performed by the processor of a node of the control source.

The processor 111 secures on the memory 112 a memory area for a communication instruction to make the node 12 transmit an RDMA communication request (Step S1).

Then, the processor 111 writes, to the memory area for the communication instruction, the address of the node 11 that is the control source of the transmission of transfer data by RDMA and is the transmission source of a packet (Step S2).

Then, the processor 111 writes, to the memory area for the communication instruction, the address of the node 12 that is the transmission source of the transfer data and is the destination of the packet (Step S3).

Then, the processor 111 writes, to the memory area for the communication instruction, the read-out memory address of the transfer data on the memory 122 of the node 12 (Step S4).

Then, the processor 111 writes, to the memory area for the communication instruction, the address of the node 13 that is the destination of the transfer data (Step S5).

Then, the processor 111 writes, to the memory area for the communication instruction, the write memory address of the transfer data on the memory 132 of the node 13 (Step S6).

Then, the processor 111 writes, to the memory area for the communication instruction, the data size of the transfer data (Step S7).

Subsequently, the processor 111 notifies the communication interface 123 of the memory address of the communication instruction (Step S8).

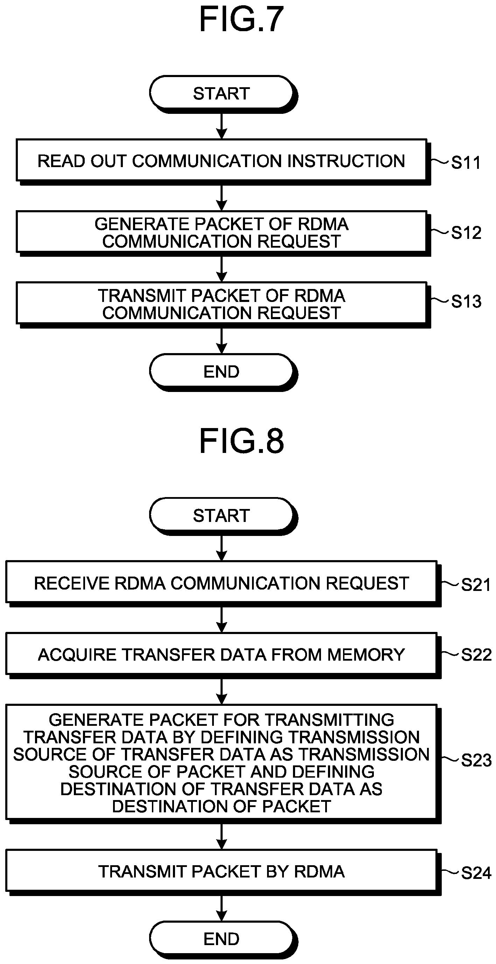

Next, with reference to FIG. 7, the following describes a sequence of transmission processing of an RDMA communication request of the communication interface 113 when the transmission of the transfer data by RDMA from the node 12 to the node 13 is controlled by the node 11. FIG. 7 is a flowchart of transmission processing of an RDMA communication request performed by the communication interface of the node of a control source.

The communication interface 113 reads out a communication instruction transmitted from the processor 111 (Step S11).

The communication interface 113 then generates a packet of RDMA communication request by using the information written in the memory area for the communication instruction specified by the communication instruction (Step S12).

The communication interface 113 then transmits the packet of RDMA communication request to the communication interface 123 of the node 12 (Step S13).

Next, with reference to FIG. 8, the following describes a sequence of transmission processing of transfer data performed by the communication interface 123 that is to be a transmission source of the transfer data when the transmission of the transfer data by RDMA from the node 12 to the node 13 is controlled by the node 11. FIG. 8 is a flowchart of the transmission processing of transfer data performed by a communication interface to be a transmission source of the transfer data.

The communication interface 123 receives the RDMA communication request transmitted from the communication interface 113 (Step S21).

The communication interface 123 then acquires, from the memory 122, the transfer data specified by the RDMA communication request (Step S22).

The communication interface 123 then generates a packet for transmitting the transfer data, by defining the transmission source of the transfer data specified by the RDMA communication request as the transmission source of the packet and by defining the destination of the transfer data as the destination of the packet (Step S23).

The communication interface 123 then transmits the packet for transmitting the transfer data to the communication interface 133 of the node 13 by RDMA (Step S24).

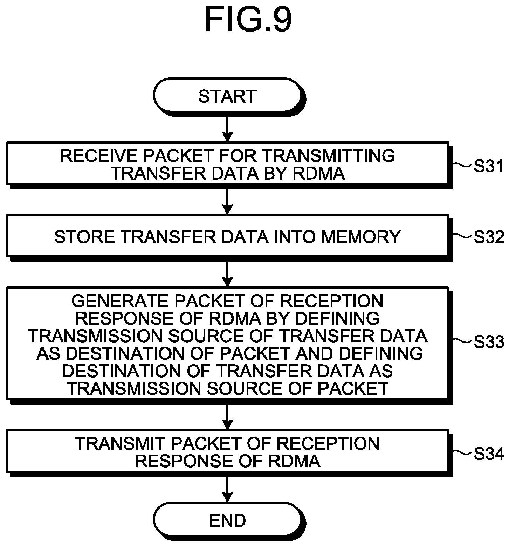

Next, with reference to FIG. 9, the following describes a sequence of transmission processing of a reception response of RDMA performed by the communication interface 133 that is to be a destination of the transfer data when the transmission of the transfer data by RDMA from the node 12 to the node 13 is controlled by the node 11. FIG. 9 is a flowchart of the transmission processing of a reception response of RDMA performed by a communication interface that is to be a destination of the transfer data.

The communication interface 133 receives the packet for transmitting the transfer data transmitted from the communication interface 123 by RDMA (Step S31).

The communication interface 133 then stores, into the specified place on the memory 132, the transfer data stored in the packet (Step S32).

The communication interface 133 then generates a packet of reception response of RDMA, by defining the transmission source of the transfer data specified by the packet for transmitting the transfer data as the destination of the packet, and defining the destination of the transfer data as the transmission source of the packet (Step S33).

The communication interface 133 then transmits the packet of reception response of RDMA to the communication interface 123 of the node 12 (Step S34).

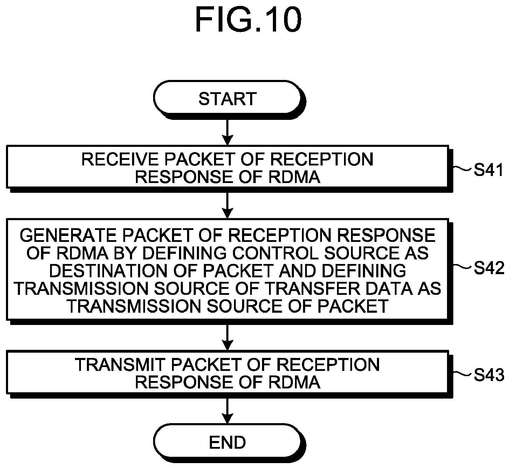

Next, with reference to FIG. 10, the following describes a sequence of transfer processing of a reception response of RDMA performed by the communication interface 123 that is to be a transmission source of the transfer data when the transmission of the transfer data by RDMA from the node 12 to the node 13 is controlled by the node 11. FIG. 10 is a flowchart of the transfer processing of a reception response of RDMA performed by a communication interface that is to be a transmission source of the transfer data.

The communication interface 123 receives a packet of reception response of RDMA transmitted from the communication interface 133 (Step S41).

The communication interface 123 then generates a packet of reception response of RDMA, by defining the control source specified by the received packet as the destination of the packet, and defining the transmission source of the transfer data as the transmission source of the packet (Step S42).

The communication interface 123 then transmits the packet of reception response of RDMA to the communication interface 113 of the node 11 (Step S43).

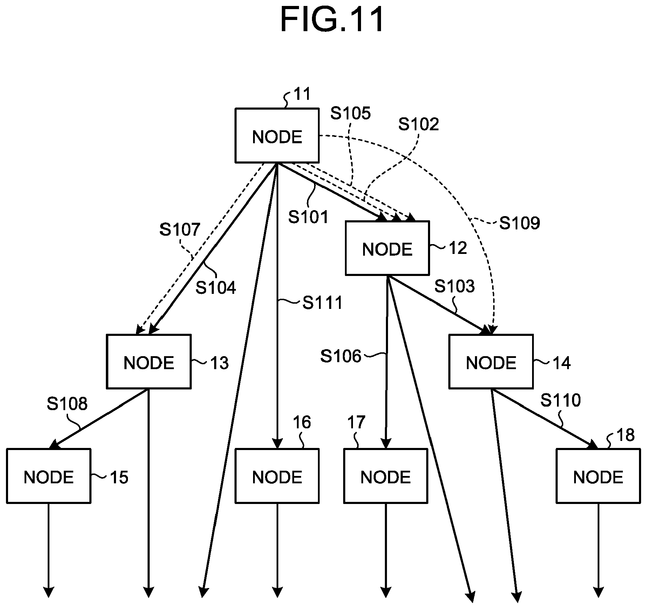

Next, overall operation of the nodes 10 included in the parallel processing apparatus 1 in the distribution of transfer data using group communication in the first embodiment will be described. FIG. 11 is a diagram for explaining the overall operation in the distribution of transfer data using group communication in the first embodiment. In FIG. 11, the nodes of the node 11 to the node 18 are illustrated. In this case also, the case that the node 11 is the control source will be described. In FIG. 11, solid lines represent the transmission of transfer data and broken lines represent the transmission of control signals.

The node 11 first transmits transfer data to the node 12 (Step S101). Accordingly, the node 12 is to hold the transfer data and can be a transfer source of the transfer data.

Thus, the node 11 transmits an RDMA communication request to the node 12 (Step S102). The node 12 receives the RDMA communication request, and transmits the transfer data to the node 14 (Step S103). Accordingly, the node 14 is to hold the transfer data and can be a transfer source of the transfer data. The node 11 further transmits the transfer data to the node 13 (Step S104). Accordingly, the node 13 is to hold the transfer data and can be a transfer source of the transfer data.

The node 11 transmits an RDMA communication request to the node 12 again when the data transfer by the node 12 has been completed (Step S105). The node 12 receives the RDMA communication request, and transmits the transfer data to the node 17 (Step S106). Accordingly, the node 17 is to hold the transfer data and can be a transfer source of the transfer data. The node 11 further transmits an RDMA communication request to the node 13 (Step S107). The node 13 receives the RDMA communication request, and transmits the transfer data to the node 15 (Step S108). Accordingly, the node 15 is to hold the transfer data and can be a transfer source of the transfer data. The node 11 further transmits an RDMA communication request to the node 14 (Step S109). The node 14 receives the RDMA communication request, and transmits the transfer data to the node 18 (Step S110). Accordingly, the node 18 is to hold the transfer data and can be a transfer source of the transfer data. The node 11 further transmits the transfer data to the node 16 (Step S111). Accordingly, the node 16 is to hold the transfer data and can be a transfer source of the transfer data.

As in the foregoing, the node 11 transmits an RDMA communication request to a node 10 having the transfer data if the node 10 is not performing the transfer processing, and makes the node 10 transmit the transfer data by RDMA. Thus, in the parallel processing apparatus 1 in the first embodiment, without waiting for the completion of transmission of transfer data performed by the other nodes 10, the node 10 available for immediate processing can be made to perform the transmission of transfer data.

Meanwhile, when the algorithm that raises the number of processes of transmission source of transfer data by the power of two is used, the processing is like the following. That is, the node 11 first transmits the transfer data to the node 12. The node 11 then transmits the transfer data to the node 13. Furthermore, the node 12 transmits the transfer data to the node 14. The node 11 then transmits the transfer data to the node 16. The node 12 transmits the transfer data to the node 17. The node 13 transmits the transfer data to the node 15. The node 14 transmits the transfer data to the node 18.

In this case, in the respective nodes 10, because the processor of transfer source performs the control of transmission processing in transmitting the transfer data, the processor is unable to perform other processing and is to be in a waiting state, during the data transfer. Meanwhile, in the method of group communication in the first embodiment, because the processors of the respective nodes 10 are not involved with the data transfer, the processors can execute the other processes regardless of the situation of the data transfer.

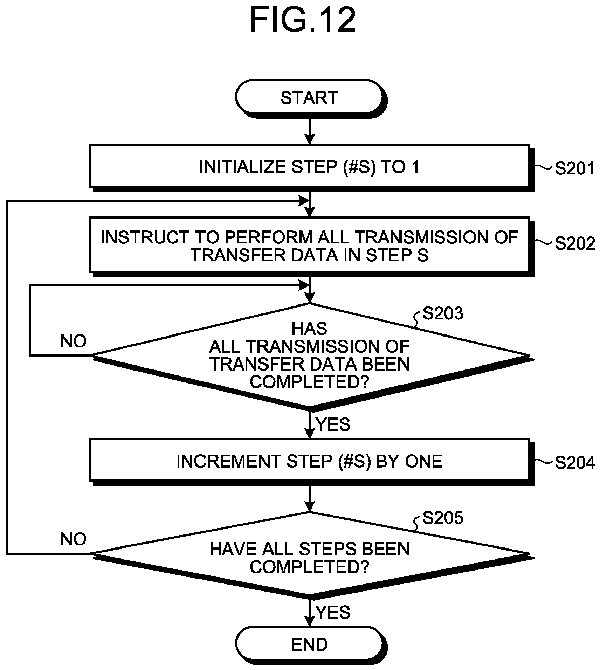

Moreover, when the method that the node 11 transmits the transfer data to all the nodes 10 is used, the processing is as illustrated in FIG. 12. FIG. 12 is a flowchart illustrating a procedure when one process executes all data transfers of the group communication. The process of performing the transmission of transfer data executed by the processor is referred to as "data transfer process" here.

The data transfer process initializes a step to one. That is, when the #Sth step is expressed as step #S, the data transfer process makes #S = 1 (Step S201).

The data transfer process then instructs the communication interface 113 to perform all the transmission of transfer data in the step #S (Step S202). All the transmission of transfer data means transmitting the transfer data to the nodes 10 of a predetermined number of destinations in each step.

Then, the data transfer process determines whether all the transmission of transfer data has been completed (Step S203). If the transmission of transfer data is remaining (No at Step S203), the data transfer process waits until all the transmission of transfer data is completed.

In contrast, if all the transmission of transfer data has been completed (Yes at Step S203), the data transfer process increments the step by one (Step S204). That is, the data transfer process makes #S = #S + 1.

Then, the data transfer process determines whether all the steps have been completed (Step S205). If an uncompleted step is remaining (No at S205), the data transfer process returns to Step S202.

In contrast, if all the steps have been completed (Yes at S205), the data transfer process ends the transmission processing of transfer data by group communication.

As just described, when one process performs all the transmission of transfer data, the process is to wait until the transmission of transfer data in each step is completed. Meanwhile, in the parallel processing apparatus 1 in the first embodiment, the process that controls the overall group communication can instruct the node 10 that has completed the transmission of transfer data to transmit the transfer data, without waiting for the completion of the transmission of transfer data among the other nodes 10. Accordingly, as compared with the case that one process performs all the transmission of transfer data, the parallel processing apparatus 1 in the first embodiment can shorten the wait time.

In addition, the hardware configuration in each node 10 in the first embodiment will be specifically described. The network 30 of the interconnect in the first embodiment includes four virtual channels. In the interconnect in the first embodiment, in addition to the Put and Get protocols of RDMA, a Copy protocol of RDMA is implemented. The Copy protocol is the protocol to receive instructions from the control source and perform the transmission of transfer data to other nodes 10.

An RDMA communication request that is a Copy start instruction is transferred on a first virtual channel. A Copy request that is accompanied with the transfer data is transferred on a second virtual channel. A reception response of RDMA that is a Copy response that gives a notice of a result is transferred on a third virtual channel. A Copy completion notice that transfers the result is transferred on a fourth virtual channel. Meanwhile, when a Get protocol of RDMA is used in the parallel processing apparatus 1 in the first embodiment, a Get request is transferred on the first virtual channel. A Get response that is accompanied with the transfer data is transferred on the second virtual channel. Furthermore, a reception response of RDMA that gives a notice of a result is transferred on the third virtual channel. When a Put protocol is used, a Put request that is accompanied with data is transferred on the second virtual channel. A Put response is transferred on the third virtual channel.

When delivery-guaranteed control at high throughput is performed, it is preferable that the virtual channel have a communication buffer of a large capacity. On this point, in the parallel processing apparatus 1 in the first embodiment, by arranging a large-capacity buffer on the second virtual channel that is accompanied with the data, the delivery-guaranteed control can be implemented. Moreover, as for a physical path on the network, as with the first virtual channel and the fourth virtual channel and as with the second virtual channel and the third virtual channel, when the transfer source and the transfer destination are inverted, a packet is controlled so as to be transferred on the same path in reverse. Accordingly, in four times of transfers in Copy, the number of searches for a communication path that avoids a faulty node can be reduced to two times.

As in the foregoing, in the parallel processing apparatus in the first embodiment, a single node executes the control of data transfer of RDMA while increasing the number of nodes of transmission sources of data. Thus, the wait time in communication control in each node included in the parallel processing apparatus is reduced and the time to execute calculation in each node is increased. Accordingly, the processing power of the parallel processing apparatus can be improved.

In the parallel processing apparatus in the first embodiment, the packet that is accompanied with data in performing group communication is the packet toward the destination of transfer data from the transmission source of the transfer data, and thus the capacity of the communication buffer provided on the virtual channel can be reduced.

Furthermore, due to a busy condition of the communication buffer, the occurrence of deadlock is conceivable. As a means of avoiding this deadlock, there is a way to discard the clogged packet and retransmit it. However, this method makes the protocol complex and becomes disincentive in scalability, and thus it is difficult to implement it. Furthermore, conceivable is a way to separate the virtual channels, for example, a way to separate the virtual channels in outward path and return path in the Put and Get, for each step of protocol. However, when the protocol is complex, the number of virtual channels increases, and thus it is difficult to implement it. Meanwhile, in the parallel processing apparatus in the first embodiment, for example, when four virtual channels are used, it only needs to arrange a large-capacity communication buffer on one virtual channel and thus the deadlock can be avoided easily.

Moreover, as for the delivery guarantee in RDMA, the method that finds in advance and uses a path that has no node failure, in a lossless network that performs retransmission at link level, is suitable. However, as the number of paths the protocol uses increases, the number of paths that needs to be found in advance increases, and thus a processing load becomes large. On this point, in the group communication of the parallel processing apparatus in the first embodiment, the number of paths used in the transmission of a packet is two when transmitting the packet from the other node to another node by the control from the control source. Thus, the search for the path to avoid faulty nodes can be finished in two times, and thus the path control of network can be simplified.

### [b] Second Embodiment

Next, a second embodiment will be described. A parallel processing apparatus according to a second embodiment is different from that of the first embodiment in that the node of the destination of transfer data transmits a reception response of RDMA to the node of the control source directly without relaying through the node of the transmission source of the transfer data. The parallel processing apparatus in the second embodiment also is represented by the block diagram in FIG. 1. In the following description, the descriptions on the functions of various units the same as those in the first embodiment are omitted.

The communication interface 113 of the node 11, when the transmission of transfer data by RDMA from the node 12 to the node 13 is controlled by the node 11, transmits an RDMA communication request to the communication interface 123 of the node 12 as with that of the first embodiment.

Subsequently, the communication interface 113 receives a packet of reception response of RDMA from the communication interface 133 of the node 13 via the network 30. Then, the communication interface 113 transmits the reception response of RDMA to the processor 111.

The communication interface 123 of the node 12, when the transmission of transfer data by RDMA from the node 12 to the node 13 is controlled by the node 11, transmits the transfer data by RDMA to the communication interface 133 of the node 13 as with that of the first embodiment. In this case, the node 12 does not perform the transfer of the packet of reception response of RDMA.

The communication interface 133 of the node 13, when the transmission of transfer data by RDMA from the node 12 to the node 13 is controlled by the node 11, receives the transfer data by RDMA from the communication interface 123 of the node 12 via the network 30 as with that of the first embodiment.

Then, the communication interface 133 generates a packet of reception response of RDMA. Specifically, the communication interface 133 acquires, from the header of the received packet, the address of the node 12 that is the transmission source of transfer data, the address of the node 13 that is the destination of transfer data, and the address of the node 11 of the control source. Moreover, the communication interface 133 acquires, from the header of the received packet, the read-out memory address, the write memory address, and the transfer data size. Then, the communication interface 133 stores, into the header of a packet to transmit, the address of the node 11 that is the control source and is the destination of the packet of reception response. The communication interface 133 further stores, into the header of the packet to transmit, the address of the node 13 that is the destination of transfer data and is the transmission source of the packet of reception response. The communication interface 133 further stores, into the header of the packet to transmit, the address of the node 12 of the transmission source of transfer data, the read-out memory address, the write memory address, and the transfer data size. Moreover, the communication interface 133 stores, into the header of the packet to transmit, an error code indicative of reception result. Then, the communication interface 133 transmits the generated packet of reception response of RDMA to the communication interface 113 of the node 11 via the network 30.

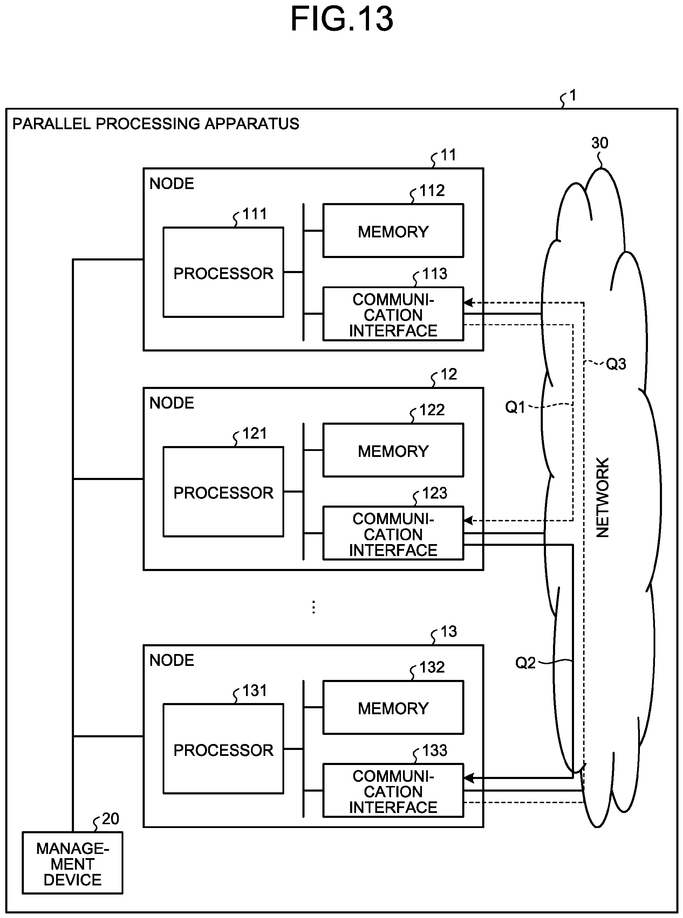

Next, with reference to FIG. 13, the following describes the transmission of an RDMA communication request, transfer data, and a reception response of RDMA in the second embodiment in a lump when the transmission of transfer data by RDMA from the node 12 to the node 13 is controlled by the node 11. FIG. 13 is a diagram illustrating the transmission of an RDMA communication request, transfer data, and a reception response of RDMA performed by the parallel processing apparatus in the second embodiment.

The communication interface 113 of the node 11, as indicated with processing Q1 as with the processing indicated with the processing P1 in FIG. 2, transmits a packet of RDMA communication request to the communication interface 123 of the node 12.

The communication interface 123 of the node 12, as indicated with processing Q2 as with the processing indicated with the processing P2 in FIG. 3, transmits transfer data to the communication interface 133 of the node 13 by transmitting a generated packet.

The communication interface 133 of the node 13 receives a packet for transmitting the transfer data which is transmitted from the communication interface 123 of the node 12. Then, the communication interface 133 of the node 13 acquires the transfer data from the received packet and stores it in the memory 132. The communication interface 133 of the node 13 then acquires, from the received packet, the address of the node 11 of the control source that is to be the destination of a packet, for example. The communication interface 133 of the node 13 then generates a packet of reception response of RDMA. Then, as indicated with processing Q3, the communication interface 133 of the node 13 directly transmits the reception response of RDMA to the communication interface 113 of the node 11 via the network 30 without relaying through the node 12.

The communication interface 113 of the node 11 receives the packet of reception response of RDMA directly from the communication interface 133 of the node 13 via the network 30 without relaying through the node 12. Then, the communication interface 113 of the node 11 transmits a reception response of RDMA to the processor 111 of the node 11. The processor 111 of the node 11 receives the reception response of RDMA and checks the completion of the transmission processing of transfer data by RDMA.

As just described, the communication interface 133 of the node 13 in the second embodiment can transmit the reception response of RDMA to the communication interface 113 of the node 11 directly without relaying through the node 12.

As in the foregoing, in the parallel processing apparatus in the second embodiment, the reception response of RDMA is transmitted to the node of the control source directly from the node of the destination of transfer data, without through another node. That is, without using the path used for the transmission of the RDMA communication request and the transfer data, the reception response of RDMA can be transmitted by using another path. As just described, the parallel processing apparatus in the second embodiment can use another path as the communication path of each packet, and thus can increase the degree of freedom in path selection.

One aspect of the parallel processing apparatus and the communication control method disclosed in the present application exhibits an effect in that the processing power can be improved.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A parallel processing apparatus(1) comprising:
a first information processing apparatus(11);
a second information processing apparatus(12); and
a third information processing apparatus(13),
the first information processing apparatus(11) comprising:
a data transfer controller(111) that starts RDMA communication of certain data and receives a response of the RDMA communication, and
a transfer instruction unit(113) that transmits an RDMA communication request giving instructions to transmit the certain data by the RDMA communication when the data transfer controller(111) starts of the RDMA communication of the certain data,
the second information processing apparatus(12) comprising:
a first memory(122) that stores therein the certain data, and
a data transmitting unit(123) that receives the RDMA communication request transmitted from the data transfer controller(111) and transmits the certain data stored in the first memory(122) to the third information processing apparatus(13) by the RDMA communication, and
the third information processing apparatus(13) comprising:
a second memory(132), and
a reception processor(133) that receives the certain data transmitted by the data transmitting unit(123) by the RDMA communication, stores the certain data into the second memory(132), generates the response of the RDMA communication, and transmits the response.

2. The parallel processing apparatus(1) according to claim 1, wherein
the data transmitting unit(123) acquires the response transmitted from the reception processor(133) and transfers the response to the transfer instruction unit(113),
the transfer instruction unit(113) receives the response transferred from the data transmitting unit(123) and transmits the response to the data transfer controller(111), and
the data transfer controller(111) receives the response transmitted from the transfer instruction unit(113).

3. The parallel processing apparatus(1) according to claim 1, wherein
the transfer instruction unit(113) receives the response transmitted from the reception processor(133) without through other information processing apparatuses and transmits the response to the data transfer controller(111), and
the data transfer controller(111) receives, as a response of the RDMA communication, the response of the certain data that the transfer instruction unit(113) has transmitted.

4. A communication control method using a first information processing apparatus(11), a second information processing apparatus(12), and a third information processing apparatus(13), the communication control method comprising:
by the first information processing apparatus(11),
starting RDMA communication of certain data, and transmitting an RDMA communication request giving instructions to transmit the certain data by the RDMA communication;
by the second information processing apparatus(12),
receiving the RDMA communication request transmitted from the first information processing apparatus(11), and
transmitting the certain data stored in a first memory(122) of the second information processing apparatus(12) to the third information processing apparatus(13) by the RDMA communication;
by the third information processing apparatus(13),
receiving the certain data transmitted from the second information processing apparatus(12) by the RDMA communication,
storing the received certain data into a second memory(132) of the third information processing apparatus(13), and
transmitting a response of reception of the certain data; and
by the first information processing apparatus(11), receiving the response.

5. A communication control program or programs configured to cause a first information processing apparatus(11), a second information processing apparatus(12), and a third information processing apparatus(13) to carry out the method of claim 4.
